# EUROPÄISCHE PATENTSCHRIFT

(11) **EP 0 429 588 B1**
(45) Veröffentlichungstag und Bekanntmachung des Hinweises auf die Patenterteilung: **16.08.1995**
(21) Anmeldenummer: 90908202.6
(22) Anmeldetag: 30.05.1990
(51) Int. Cl.: G02B 5/20, G02B 26/02

(54) **ABSCHWÄCHER FÜR EINEN LASERSTRAHL**
ATTENUATOR FOR A LASER BEAM
AFFAIBLISSEUR POUR FAISCEAU LASER

(30) Priorität: 03.06.1989 DE 3918197
(43) Veröffentlichungstag der Anmeldung: 05.06.1991
(73) Patentinhaber: DEUTSCHE FORSCHUNGSANSTALT FÜR LUFT- UND RAUMFAHRT e.V., 53111 Bonn (DE)
(72) Erfinder: SCHNEE, Peter, D-7000 Stuttgart 80 (DE); HALL, Thomas, D-7041 Hildrizhausen (DE)
(74) Vertreter: Hoeger, Stellrecht & Partner
(86) Internationale Anmeldenummer: EP9000865
(87) Internationale Veröffentlichungsnummer: WO9015348

(56) Entgegenhaltungen:
- EP-A- 0 115 874
- US-A- 4 167 666
- US-A- 4 561 721

## Beschreibung

Die Erfindung betrifft einen Abschwächer für einen Laserstrahl eines Hochleistungslasers, umfassend mehrere in einer Abschwächerstellung sich in einer quer zu einer Strahlrichtung des Laserstrahls ausgerichteten Fläche erstreckende und von dem Laserstrahl angestrahlte Beugungselemente nach dem Oberbegriff des Anspruchs 1.

Aus der US-A-4 561 721 ist es bekannt, zur Abschwächung eines Laserstrahls Beugungselemente in diesen einzuführen und diese so auszurichten, daß die sich in Strahlrichtung fortpflanzende gebeugte Laserstrahlung eine erheblich geringere Intensität aufweist als die ursprüngliche Laserstrahlung, um diese dann meßtechnisch nachzuweisen.

Ein derartiger Abschwächer hat den Nachteil, daß der Laserstrahl eines Hochleistungslasers das Beugungselement so stark aufheizt, daß zusätzliche Kühlmaßnahmen, beispielsweise in Form von Luftkühlung, getroffen werden müssen, die jedoch in vielen Fällen ebenfalls nicht ausreichen, um das Beugungselement vor thermischer Zerstörung wegen zu großer Aufheizung durch den Laserstrahl zu schützen.

Aus der EP-A-0 115 874 ist es ferner bekannt, ein optisches Filter durch einen Antrieb ständig zu bewegen, so daß ständig ein anderer Bereich des Filters von energiereichem Licht durchstrahlt wird und dadurch eine thermische Zerstörung des Filters verhindert wird.

Der Erfindung liegt daher die Aufgabe zugrunde, einen Abschwächer der gattungsgemäßen Art derart zu verbessern, daß dieser auch den Laserstrahlen von Hochleistungslasern standhält.

Diese Aufgabe wird bei einem Abschwächer der eingangs beschriebenen Art erfindungsgemäß durch die Merkmale des Anspruchs 1 gelöst.

Der Vorteil der erfindungsgemäßen Lösung liegt darin, daß aufgrund der ständig wechselnden angestrahlten Teilbereiche die nicht angestrahlten Teilbereiche die Möglichkeit haben, abzukühlen, und somit eine Aufheizung vermieden wird, so daß ohne zusätzliche Kühlung bei den bei Hochleistungslasern üblichen Leistungen gearbeitet werden kann. Auf jeden Fall ist sichergestellt, daß mit einer zusätzlichen Kühlung das Beugungselement auch den wesentlich höheren Leistungen zukünftiger Höchstleistungslaser standhält.

Besonders vorteilhaft ist es im Rahmen der vorliegenden Erfindung, wenn die Bewegung des Beugungselements periodisch erfolgt, so daß die einzelnen Teilbereiche im konstanten zeitlichen Wechsel angestrahlt sind und sich somit eine gleichmäßige mittlere thermische Belastung der Teilbereiche einstellt.

Ein besonders bevorzugtes Ausführungsbeispiel der erfindungsgemäßen Lösung sieht vor, daß die Beugungselemente um eine neben dem Laserstrahl angeordnete Achse drehbar und durch den Antrieb in Rotation versetzbar sind und daß die wechselnd vom Laserstrahl angestrahlten Teilbereiche in zur Achse koaxialen Ringen liegen. Dieses Ausführungsbeispiel der erfindungsgemäpen Lösung ist besonders vorteilhaft, da sich in sehr einfacher Weise erreichen läßt, daß alle Teilbereiche im Mittel mit der gleichen thermischen Leistung angestrahlt werden und außerdem im Mittel die gleiche Zeit zur Verfügung haben, um wieder abzukühlen.

Besonders vorteilhaft hat sich eine Ausführungsform der erfindungsgemäßen Lösung erwiesen, bei der die Beugungselemente von einer unwirksamen Stellung in die Abschwächerstellung bewegbar sind, so daß insbesondere bei mehreren Beugungselementen wahlweise eine unterschiedliche Zahl von Beugungselementen in den Laserstrahl hineinbewegt werden kann. Dies läßt sich konstruktiv am einfachsten dadurch realisieren, daß die Beugungselemente an Schwenkarmen gehalten sind.

Um auch gleichzeitig noch das jeweilige Beugungselement in einfacher Weise antreiben zu können, ist es zweckmäßig, wenn der Antrieb an dem Schwenkarm gehalten ist, so daß eine komplizierte Antriebsübertragung auf das am Schwenkarm gehaltene Beugungselement entfällt.

Der Antrieb des jeweiligen Beugungselements zur Rotation läßt sich am einfachsten dadurch realisieren, daß das Beugungselement auf einer Motorwelle eines als Antrieb dienenden Motors sitzt.

Die einfachste Möglichkeit, das jeweilige Beugungselement zu gestalten, ist die, daß das Beugungselement die Form einer Kreisscheibe aufweist, da es sich in diesem Fall schwingungsfrei rotierend antreiben läßt.

Das Beugungselement selbst ist vorzugsweise als Metallgitter gestaltet.

Vorzugsweise ist dabei vorgesehen, daß sich unterschiedliche Beugungselemente in unterschiedlichen Flächen erstrecken, welche in einem unterschiedlichen, von 90° verschiedenen Winkel quer zur Strahlrichtung ausgerichtet sind.

Darüberhinaus ist zweckmäßigerweise vorgesehen, daß eine Fläche eine senkrecht zur Achse stehende ebene Fläche ist.

Bei mehreren unterschiedlichen Beugungselementen hat es sich als besonders vorteilhaft erwiesen, wenn die Flächen aufeinanderfolgender Beugungselemente in koaxial zur Achse ausgerichteten Kegelmantelflächen mit unterschiedlichem Kegelwinkel liegen. Damit läßt sich in einfacher Weise die Verkippung der Flächen relativ zueinander erreichen, in welcher die Beugungselemente stehen sollen.

Schließlich ist es von Vorteil, wenn die Periodizitätsrichtungen unterschiedlicher Beugungselemente sich voneinander unterscheiden. Dies ist notwendig, um zu verhindern, daß ein aus der Strahlrichtung herausgebeugtes Beugungsmaximum wieder in die Strahlrichtung zurückgebeugt wird.

Um insbesondere bei mehreren Beugungselementen zu erreichen, daß die Richtungen der Periodizität im Laufe der Bewegungen nicht zumindest zeitweise identisch sind, sondern die einmal festgelegten unterschiedlichen Richtungen relativ zueinander erhalten bleiben, ist vorgesehen, daß die Beugungselemente synchron zueinander angetrieben sind. Dies läßt sich einerseits besonders vorteilhaft dadurch realisieren, daß die Beugungselemente auf einer Welle sitzen. Alternativ dazu ist es, insbesondere, wenn mehrere Antriebe vorgesehen sind, von Vorteil, wenn die Antriebe Synchronantriebe sind, welche durch eine Steuerung miteinander synchronisierbar sind.

Ein besonders bevorzugtes Ausführungsbeispiel des erfindungsgemäßen Abschwächers sieht vor, daß dieser einen Kanal mit einem Durchbruch umfaßt, in welchen die Beugungselemente eingreifen.

Besonders vorteilhaft ist es hierbei, wenn der Kanal eine aus den Laserstrahl absorbierendem Material hergestellte Innenwandfläche umfaßt, da auf dieser die Beugungsmaxima auftreffen und von dieser möglichst nicht zurückreflektiert werden sollen.

Weitere Merkmale und Vorteile der vorliegenden Erfindung sind Gegenstand der nachfolgenden Beschreibung sowie der zeichnerischen Darstellung einiger Ausführungsbeispiele. In der Zeichnung zeigen:
- Fig. 1: Eine teilweise geschnittene Draufsicht auf ein erstes Ausführungsbeispiel;
- Fig. 2: eine Ansicht längs Linie 2-2 in Fig. 1 und
- Fig. 3: eine teilweise geschnittene Draufsicht auf ein zweites Ausführungsbeispiel.

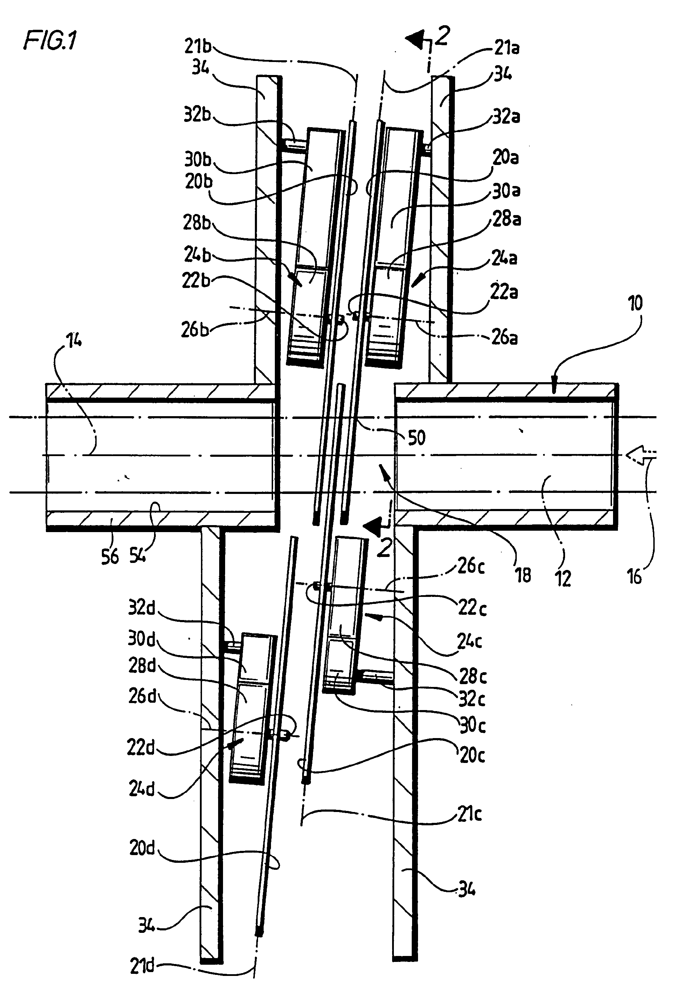

Ein erstes Ausführungsbeispiel eines erfindungsgemäßen Abschwächers, dargestellt in Fig. 1, umfaßt einen Kanal 10, durch welchen ein Laserstrahl 12 mit einer zu einer Kanalachse 14 parallel gerichteten Strahlrichtung 16 vorzugsweise koaxial zur Kanalachse 14 hindurch verläuft. Der Kanal 10 ist durch einen Durchbruch 18 unterbrochen, so daß in diesem Durchbruch 18 der Laserstrahl 12 frei verläuft.

In dem Durchbruch 18 sind kreisscheibenförmige Beugungselemente 20a, b, c und d so weit einschiebbar, daß sie jeweils vom Laserstrahl 12 mit seiner gesamten Querschnittsfläche angestrahlt sind. Dabei stehen die Beugungselemente 20a - c in Abschwächerstellung, während das Beugungselement 20d in unwirksamer Stellung steht. Diese Beugungselemente 20a - d sind jeweils drehfest auf Motorwellen 22a - d von Antriebsmotoren 24a - d gehalten und können durch die Antriebsmotoren 24a - d in Rotation um jeweils seitlich der Kanalachse 14 liegende Achsen 26a - d versetzt werden. Um die Beugungselemente 20a - d in den Durchbruch 18 einschwenkbar zu machen, sind die Antriebsmotoren 24a - d mit ihrem Gehäuse 28a - d jeweils fest an einem Schwenkarm 30a - d gehalten, der seinerseits um einen Zapfen 32a - d drehbar ist. Dieser Zapfen 32a - d ist jeweils an einer mit dem Kanal 10 verbundenen Tragplatte 34 gehalten.

Durch Verschwenken der Arme 30a - d um die Zapfen 32a - d können die Beugungselemente 20a - d in den Laserstrahl 12 eingeschwenkt werden.

Vorzugsweise sind die Beugungselemente 20a - d Kreisscheiben, die sich in einer Ebene 21a - d erstrecken, wobei die Ebene senkrecht auf der Achse 26a steht, jedoch nicht senkrecht zur Strahlrichtung 16 steht, sondern um einen Winkel gegenüber der Strahlrichtung 16 geneigt ist, welcher geringfügig von einem rechten Winkel abweicht. Zweckmäßigerweise sind alle Beugungselemente 20a - d in Strahlrichtung 16 im Abstand voneinander angeordnet und um Zapfen 32a - d schwenkbar, so daß jedes der Beugungselemente 20a - d unabhängig von den anderen Beugungselementen 20a - d von der Abschwächerstellung in die unwirksame Stellung und umgekehrt verschwenkbar ist.

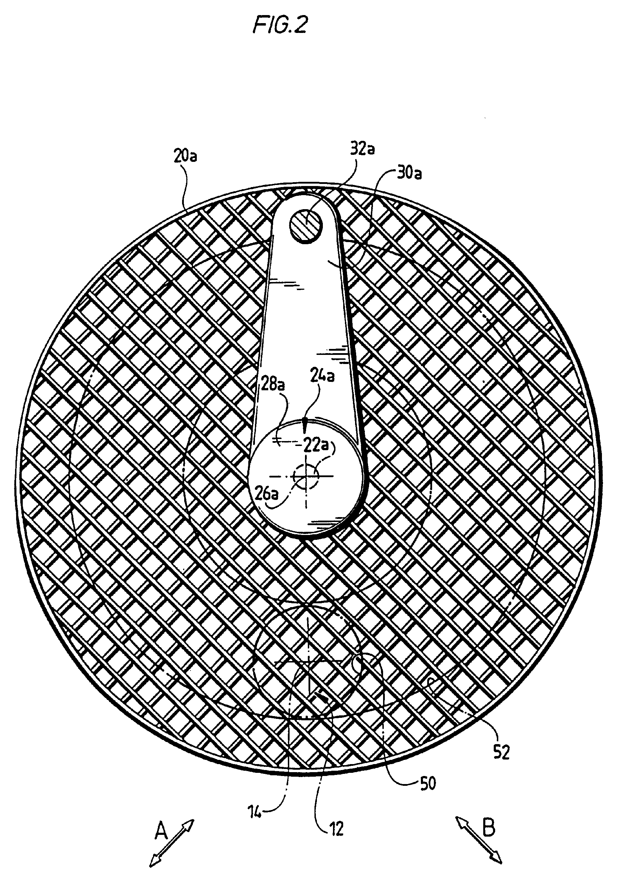

Die Beugungselemente sind, wie in Fig. 2 vergrößert dargestellt, in zwei unterschiedlichen Richtungen A und B der Ebene, in welcher das jeweilige Beugungselement 20a - d liegt, periodisch beugend ausgebildet, wobei jedes der Beugungselemente 20a - d relativ zum anderen Beugungselement 20a - d in seiner in den Laserstrahl 12 eingeschwenkten Abschwächerstellung, wie in Fig. 1 anhand der Beugungselemente 20a - c dargestellt, in voneinander abweichenden Richtungen A und B periodisch ist.

Beispiele von Beugungselementen und der relativen Orientierung dieser Beugungselemente zueinander sind in der US-A 4 561 721 dargestellt.

Im einfachsten Fall sind die Beugungselemente 20a - d, wie in Fig, 2 dargestellt, Metallgitter, mit einer Periodizität, welche in der Größenordnung des Eins- bis Zehnfachen der Wellenlänge des Laserstrahls 12 steht.

Um sicherzustellen, daß die Richtungen A und B der Periodizität der einzelnen Beugungselemente 20a - d relativ zueinander während des Antriebs der Beugungselemente 20a - d nicht zeitweise identisch sind, ist zweckmäßigerweise vorgesehen, daß die Antriebsmotoren 24a - d synchron zueinander angetrieben werden, d.h. in einfachsten Fall Synchronmotoren sind, so daß durch eine ursprünglich unterschiedliche Ausrichtung der Beugungselemente 20a - d relativ zueinander diese Ausrichtung während des Betriebs des erfindungsgemäßen Abschwächers erhalten bleibt.

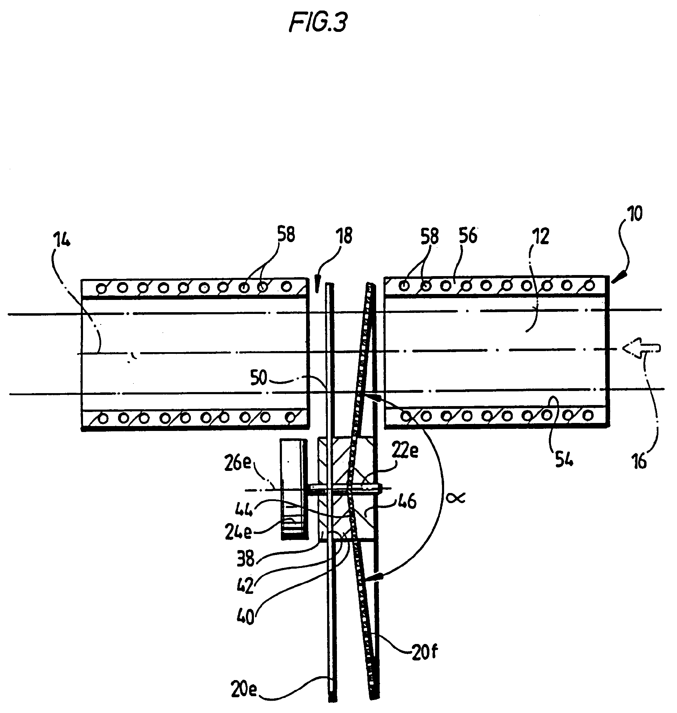

Bei einem zweiten Ausführungsbeispiel des erfindungsgemäßen Abschwächers, dargestellt in Fig. 3, sind, insoweit als die dieselben Teile Verwendung finden, diese mit denselben Bezugszeichen versehen, so daß hinsichtlich deren Beschreibung auf die Ausführungen zum ersten Ausführungsbeispiel verwiesen werden kann.

Im Gegensatz zum ersten Ausführungsbeispiel ist lediglich ein Antriebsmotor 24e vorhanden, auf dessen Motorwelle 22e insgesamt zwei Beugungselemente 20e und f montiert sind, wobei das Beugungselement 20e eine ebene Kreisscheibe entsprechend dem Beugungselement 20a in Fig. 2 darstellt, während das Beugungselement 20f in einer Kegelmantelfläche liegt, wobei die Kegelachse koaxial zur Achse 26e der Motorwelle 22e verläuft und ein Winkel α in der Kegelspitze geringfügig kleiner als 180° ist. Somit ist bereits sichergestellt, daß die Beugungselemente 20e und f in relativ zueinander nicht in parallelen Ebenen liegen.

Gleichzeitig kann durch die Montage der Beugungselemente 20e und f auf der Motorwelle 22e sichergestellt werden, daß deren Richtungen der Periodizität unterschiedlich verlaufen.

Vorzugsweise werden die Beugungselemente 20e und f, wie in Fig. 3 dargestellt, so auf der Motorwelle 22e montiert, daß das Beugungselement 20e zwischen zwei Spannelementen 38 und 40 liegt, die jeweils eine senkrecht zur Achse 26e verlaufende Spannfläche 42 aufweisen, während das Spannelement 40 zusätzlich noch eine auf einer Kegelmantelfläche liegende Spannfläche 44 aufweist, gegen welche das Beugungselement 20f mittels eines weiteren Spannelements 46 mit ebenfalls einer Kegelmantelfläche als Spannfläche 44 gedrückt und somit ebenfalls parallel zu dieser Kegelmantelfläche ausgerichtet ist.

Bei all den beschriebenen Ausführungsbeispielen von Beugungselementen 20a - f wird - wie am Beispiel des Beugungselements 20a in Fig. 2 dargestellt - vom Laserstrahl 12 lediglich ein entsprechend dem Querschnitt des Laserstrahls 12 geformter Teilbereich 50 des jeweiligen Beugungselements 20a - f angestrahlt, wobei die Rotation des Beugungselements 20a - f dazu führt, daß die Teilbereiche 50 Elemente eines konzentrisch um die jeweilige Achse 26a - e verlaufenden Kreisrings 52 sind.

Durch die Tatsache, daß durch die rotierenden Beugungselemente 20a - f aufeinanderfolgende Teilbereiche 50 des Kreisrings 52 angestrahlt werden, können diese, so lange sie nicht angestrahlt sind, abkühlen und somit läßt sich die Zerstörung der Beugungselemente 20a - f bei hoher Temperatur vermeiden.

Vorzugsweise ist noch vorgesehen, daß innere Wandflächen 54 des Kanals 10 stark absorbierend gestaltet sind, da gegen diese Wandflächen 54 die von den Beugungselementen 20a - f gebeugte Laserstrahlung möglichst vollständig absorbiert werden muß. Vorzugsweise sind hierzu alle Wände 56 des Kanals 10 - wie in Fig. 3 dargestellt - mit Kühlkanälen 58 durchsetzt, so daß diese gekühlt werden können. Alternativ dazu ist es aber auch möglich, die Wände 56 mit Luft anzublasen und hierdurch zu kühlen, wozu beispielsweise die Motorwellen 26a - e jeweils noch ein Lüfterrad tragen können.

## Patentansprüche

1. Abschwächer für einen Laserstrahl (12) eines Hochleistungslasers, umfassend mehrere in einer Abschwächerstellung in Strahlrichtung (16) des Laserstrahls (12) im Abstand voneinander angeordnete, quer zur Strahlrichtung (16) des Laserstrahls (12) ausgerichtete und vom Laserstrahl (12) angestrahlte Beugungselemente (20), deren Flächen in jeweils unterschiedlichen Winkeln zueinander stehen,
dadurch gekennzeichnet, daß
sich die Beugungselemente (20) in Richtung quer zur Strahlrichtung (16) über den Laserstrahl (12) hinauserstrecken, so daß nur ein Teilbereich (50) des jeweiligen Beugungselements (20) vom Laserstrahl (12) angestrahlt ist und daß ein Antrieb (24) vorgesehen ist, der so ausgebildet ist, daß die Beugungselemente (20) in dieser Richtung ständig derart bewegt werden, so daß der Laserstrahl (12) ständig wechselnde Teilbereiche (50) des Beugungselements anstrahlt, wobei die Beugungselemente (20) bei ihrer Bewegung stets denselben Winkel mit der Strahlrichtung (16) einschließen und die Beugungselemente (20a-d; 20e-f) synchron zueinander angetrieben werden.

2. Abschwächer nach Anspruch 1, dadurch gekennzeichnet, daß die Bewegung der Beugungselemente (20) periodisch erfolgt.

3. Abschwächer nach Anspruch 1 oder 2, dadurch gekennzeichnet, daß die Beugungselemente (20) um eine neben dem Laserstrahl (12) angeordnete Achse (26) drehbar und durch den Antrieb (24) in Rotation versetzbar sind und daß die wechselnd vom Laserstrahl (12) angestrahlten Teilbereiche (50) in einem zur Achse koaxialen Ring (52) liegen.

4. Abschwächer nach einem der voranstehenden Ansprüche, dadurch gekennzeichnet, daß die Beugungselemente (20) von einer unwirksamen Stellung in die Abschwächerstellung bewegbar sind.

5. Abschwächer nach Anspruch 4, dadurch gekennzeichnet, daß die Beugungselemente (20) an einem Schwenkarm (30) gehalten sind.

6. Abschwächer nach Anspruch 5, dadurch gekennzeichnet, daß der Antrieb (24) am Schwenkarm (30) gehalten ist.

7. Abschwächer nach einem der voranstehenden Ansprüche, dadurch gekennzeichnet, daß die Beugungselemente (20) auf einer Motorwelle (22) eines als Antrieb dienenden Motors (24) sitzen.

8. Abschwächer nach einem der voranstehenden Ansprüche, dadurch gekennzeichnet, daß die Beugungselemente (20) die Form einer Kreisscheibe aufweisen.

9. Abschwächer nach einem der voranstehenden Ansprüche 3-8, dadurch gekennzeichnet, daß die Flächen senkrecht zur Achse (26) stehende ebene Flächen sind.

10. Abschwächer nach einem der voranstehenden Ansprüche 3-8, dadurch gekennzeichnet, daß die Flächen aufeinanderfolgender Beugungselemente (20) koaxial zur Achse (26) ausgerichtete Kegelmantelflächen mit unterschiedlichem Kegelwinkel (α) sind.

11. Abschwächer nach Anspruch 10 oder 11, dadurch gekennzeichnet, daß die Beugungselemente (20e, f) auf einer gemeinsamen Welle (22e) sitzen.

12. Abschwächer nach einem der voranstehenden Ansprüche, dadurch gekennzeichnet, daß jedes Beugungselement (20a-d) mit einem eigenen Antrieb versehen ist und daß die Antriebe (24a-d) miteinander gekoppelte Synchronantriebe sind.

13. Abschwächer nach einem der voranstehenden Ansprüche, dadurch gekennzeichnet, daß ein Kanal (10) für den Laserstrahl (12) mit einem Durchbruch (18) vorgesehen ist, in welchen die Beugungselemente (20) eingreifen.

14. Abschwächer nach Anspruch 14, dadurch gekennzeichnet, daß der Kanal (10) eine, aus den Laserstrahl absorbierendem Material hergestellte, Innenwandfläche (54) aufweist.

## Claims

1. Attenuator for a laser beam (12) of a high-power laser, comprising a plurality of diffraction elements (20) arranged in an attenuating position in spaced relation to one another in beam direction (16) of the laser beam (12), said elements extending transversely to the beam direction (16) of the laser beam (12) and being irradiated by the laser beam (12), surface areas of said diffraction elements (20) being oriented at respectively different angles to one another, characterized in that the diffraction elements (20) extend beyond the laser beam (12) in a direction transversely to the beam direction (16) so that only a partial region (50) of the respective diffraction element (20) is irradiated by the laser beam (12), and that a drive (24) is provided, said drive (24) being designed such that the diffraction elements (20) are moved continuously in this direction such that the laser beam (12) irradiates continuously alternating partial regions (50) of the diffraction element, wherein the diffraction elements (20) always have the same angle in relation to the beam direction (16) during their movement and the diffraction elements (20a-d; 20e-f) are driven synchronously to one another.

2. Attenuator as defined in claim 1, characterized in that the movement of the diffraction elements (20) takes place periodically.

3. Attenuator as defined in claim 1 or 2, characterized in that the diffraction elements (20) are rotatable about an axis (26) arranged beside the laser beam (12) and are adapted to be rotated by the drive (24) and that the partial regions (50) alternatingly irradiated by the laser beam (12) are located in a ring (52) coaxial to the axis.

4. Attenuator as defined in any one of the preceding claims, characterized in that the diffraction elements (20) are moveable from an inoperative position into the attenuating position.

5. Attenuator as defined in claim 4, characterized in that the diffraction elements (20) are held on a pivot arm (30).

6. Attenuator as defined in claim 5, characterized in that the drive (24) is held on the pivot arm (30).

7. Attenuator as defined in any one of the preceding claims, characterized in that the diffraction elements (20) are seated on a motor shaft (22) of a motor (24) acting as drive.

8. Attenuator as defined in any one of the preceding claims, characterized in that the diffraction elements (20) have the shape of a circular disc.

9. Attenuator as defined in any of the the preceding claims 3 - 8, characterized in that the surface areas are plane surface areas oriented perpendicular to the axis (26).

10. Attenuator as defined in any one of the preceding claims 3 - 8, characterized in that the surface areas of consecutive diffraction elements (20) are cone-shaped shell surfaces with different cone angles (a) aligned coaxially to the axis (26).

11. Attenuator as defined in claim 10 or 11, characterized in that the diffraction elements (20e, f) are seated on a common shaft (22e).

12. Attenuator as defined in any one of the preceding claims, characterized in that each diffraction element (20a-d) is provided with its own drive and that the drives (24a-d) are synchronous drives coupled to one another.

13. Attenuator as defined in any one of the preceding claims, characterized in that a channel (10) with an opening (18) is provided for the laser beam (12), the diffraction elements (20) entering said opening.

14. Attenuator as defined in claim 14, characterized in that the channel (10) has an inner wall surface (54) produced from a material absorbing the laser beam.

## Revendications

1. Affaiblisseur pour un faisceau laser (12) d'un laser de grande puissance, comprenant plusieurs éléments de diffraction (20) disposés dans une position d'affaiblissement et à distance les uns des autres dans la direction de rayonnement (16) du faisceau laser (12), orientés transversalement à la direction de rayonnement (16) du faisceau laser (12) et éclairés par le faisceau laser, dont les surfaces sont disposées les unes par rapport aux autres selon des angles respectivement différents,
caractérisé en ce que les éléments de diffraction (20) s'étendent dans une direction transversale à la direction de rayonnement (16) au-delà du faisceau laser (12), de manière que seule une zone partielle (50) de l'élément de diffraction respectif (20) soit éclairée par le faisceau laser (12), et en ce qu'un dispositif d'entraînement (24) est prévu, qui est constitué de manière que les éléments de diffraction (20) soient déplacés continuellement dans cette direction de manière que le faisceau laser (12) éclaire des zones partielles (50) de l'élément de diffraction continuellement alternantes, les éléments de diffraction (20) formant toujours pendant leur mouvement le même angle avec la direction de rayonnement (16) et les éléments de diffraction (20a-d ; 20e-f) étant entraînés de façon synchrone les uns par rapport aux autres.

2. Affaiblisseur selon la revendication 1, caractérisé en ce que le mouvement des éléments de diffraction (20) s'effectue périodiquement.

3. Affaiblisseur selon la revendication 1 ou 2, caractérisé en ce que les éléments de diffraction (20) sont pivotants autour d'un axe (26) disposé à côté du faisceau laser (12) et peuvent être entraînés en rotation par le dispositif d'entraînement (24) et en ce que les zones partielles (50) qui sont éclairées alternativement par le faisceau laser (12) sont situées sur un anneau (52) coaxial à l'axe.

4. Affaiblisseur selon l'une quelconque des revendications précédentes, caractérisé en ce que les éléments de diffraction (20) peuvent être déplacés depuis une position inactive vers la position d'affaiblissement.

5. Affaiblisseur selon la revendication 4, caractérisé en ce que les éléments de diffraction (20) sont montés sur un bras pivotant (30).

6. Affaiblisseur selon la revendication 5, caractérisé en ce que le dispositif d'entraînement (24) est monté sur le bras pivotant (30).

7. Affaiblisseur selon l'une quelconque des revendications précédentes, caractérisé en ce que les éléments de diffraction (20) sont montés sur un arbre de moteur (22) d'un moteur (24) servant de dispositif d'entraînement.

8. Affaiblisseur selon l'une quelconque des revendications précédentes, caractérisé en ce que les éléments de diffraction (20) ont la forme d'un disque circulaire.

9. Affaiblisseur selon l'une quelconque des revendications précédentes 3 à 8, caractérisé en ce que les surfaces sont des surfaces planes orientées perpendiculairement à l'axe (26).

10. Affaiblisseur selon l'une quelconque des revendications précédentes 3 à 8, caractérisé en ce que les surfaces d'éléments de diffraction (20) successifs sont des surfaces d'enveloppe coniques orientées coaxialement à l'axe (26) et présentant des angles de conicité (a) différents.

11. Affaiblisseur selon la revendication 9 ou 10, caractérisé en ce que les éléments de diffraction (20e, f) sont montés sur un arbre commun (22e).

12. Affaiblisseur selon l'une quelconque des revendications précédentes, caractérisé en ce que chaque élément de diffraction (20a-d) est muni de son propre dispositif d'entraînement et en ce que les dispositifs d'entraînement (24a-d) sont des entraînements synchrones accouplés les uns aux autres.

13. Affaiblisseur selon l'une quelconque des revendications précédentes, caractérisé en ce qu'est prévu un canal (10) destiné au faisceau laser (12) et muni d'un passage (18) dans lequel pénètrent les éléments de diffraction (20).

14. Affaiblisseur selon la revendication 13, caractérisé en ce que le canal (10) comprend une surface de paroi interne (54) réalisé en un matériau qui absorbe le faisceau laser.
